Europäisches Patentamt

(19) European Patent Office

Office européen des brevets

(11) Publication number : **0 446 072 A2**

## EUROPEAN PATENT APPLICATION

(21) Application number : 91301966.7

(22) Date of filing : 08.03.91

(51) Int. Cl.⁵ : **H01S 3/0971**

(30) Priority : 08.03.90 JP 57116/90

(43) Date of publication of application :
**11.09.91 Bulletin 91/37**

(84) Designated Contracting States :
**DE FR GB**

(71) Applicant : **MATSUSHITA ELECTRIC
INDUSTRIAL CO., LTD.
1006, Oaza Kadoma
Kadoma-shi, Osaka-fu, 571 (JP)**

(72) Inventor : **Furuya, Nobuaki
1-2-2-1009, Hakusan
Asao-ku, Kawasaki (JP)**
Inventor : **Ono, Takuhiro
4-3011-18, Iriya
Zama-shi, Kanagawa-ken (JP)**
Inventor : **Horiuchi, Naoya
5-1-6-1004, Hakusan
Asao-ku, Kawasaki (JP)**
Inventor : **Yamanaka, Keiichiro
3-33-17, Sugao
Miyamae-ku, Kawasaki (JP)**
Inventor : **Miyata, Takeo
2224-12, Kurihara
Zama-shi, Kanagawa-ken (JP)**

(74) Representative : **Senior, Alan Murray et al
J.A. KEMP & CO 14 South Square Gray's Inn
London WC1R 5EU (GB)**

(54) **Laser apparatus with preionization.**

(57) A laser apparatus with preionization comprises : a laser medium ; main electrodes for produce a glow discharge therebetween ; an optical resonator ; a first capacitor for storing a first charge used for production of the glow discharge ; a preionizing circuit including a spark gap and a second capacitor connected to the spark gap in series for illuminating the laser medium around the electrodes with sparks developed between the spark gap in response to charging of the second capacitor through the spark gap with a second charge, the preionizing circuit being connected to the first capacitor in parallel ; and a charging circuit responsive to a control signal for charging the first and second capacitors with the first and second charges received from a high voltage source. The second capacitor is provided only for discharging, thus the current flows in the spark gap is reduced, so that wear of the spark gap is reduced. Inductance associated with glow discharge is reduced because the spark gap is removed from the discharge circuit including the first capacitor, so that the discharge glow starts rapidly. A coil may be inserted in the preionizing circuit in series to control a current flowing therein.

EP 0 446 072 A2

# FIG. 1

HIGH VOLTAGE POWER SUPPLY 7

17 COIL

8 TRIGGER SIG

5 THYRATRON

CHARGE CAPACITOR 4

6 CHARGE COIL

9 CHARGE TRANSFER CURRENT

MAIN DISCHARGE 12

13a

1a

3a

10

2a

11 MAIN DISCHARGE CURRENT

3b MAIN DISCHARGE ELECTRODE

PREIONIZING CAPACITOR 13b

1b PEAKING CAPACITOR

10 PREIONIZING SPARK LIGHT

18 OPTICAL RESONATOR

2b PREIONIZING SPARK GAP

# LASER APPARATUS WITH PREIONIZATION

This invention relates to a laser apparatus with preionization.

A laser apparatus where discharge excitation is carried out, is known, which is used with its discharge stabled by preionization. Particularly, in the excimer laser apparatus, the stabilization of the discharge by this preionization is an essential technique. Such laser apparatus using such preionizing apparatus is disclosed, for example, in "DEVELOPMENT OF EXCIMER LASER AND ITS APPLICATION TECHNIQUE AND EXAMPLE" (Syuntarou Watanabe, Application Technique Publishing) at pages 15-30. Hereinbelow will be described a laser apparatus using the preionizing apparatus of this technique with reference to drawings.

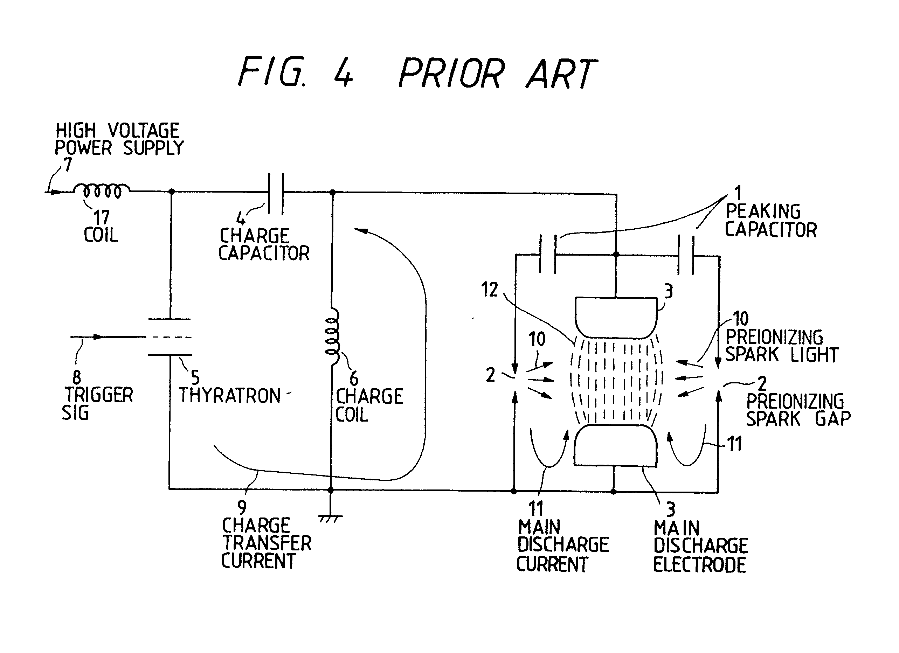

Fig. 4 is a schematic circuit diagram of a prior art laser apparatus. As shown in Fig. 4, a main discharge circuit for performing a main discharge comprises a peaking capacitor 1, preionizing spark gap 2, and a main discharge electrode 3. A charge circuit comprises a charge capacitor 4, a thyratron 5, and a charge coil 6.

In the above-mentioned structure, hereinbelow will be described its operation.

A charge capacitor 4 is charged at a high voltage through a charge coil 6 by a high voltage supply 7. When a trigger signal 8 is applied to the thyratron 5, the thyratron 5 conducts and rapidly discharges to produce a charge transfer current 9. The charge transfer current 9 passes preionizing spark gaps 2 by discharging with sparks and charges the peaking capacitor 1. Ultra-violet (UV) light developed by sparks at the preionizing gaps 2 illuminates the main discharge electrode 3 as preionization light 10. This illumination ionizes a laser medium gas (in the excimer laser, a mixture gas of noble and halogen gases) around the main discharge electrode 3 to make it in the state that a uniform glow discharge can be performed. When the peaking capacitor 1 is sufficiently charged, a high voltage is applied between two main discharge electrodes 3. When the high voltage reaches a sufficient level, a glow discharge begins rapidly which is induced by the above-mentioned preionization to produce a main discharge current 11 flowing as a pulse current with a large intensity, so that a main discharge 12 is developed between the main discharge electrodes 3. The main discharge 12 brings the laser medium in a discharge excitation. Then, laser light is oscillated by an optical resonator including suitable mirrors, etc.

However, in the prior art laser apparatus using the preionizing apparatus, there are problems because the preionizing spark gaps 2 are included in the main discharge circuit.

A first problem is as follows:

The charge transfer current 9 developed by transferring of charges in the charge capacitor 4 to the peaking capacitor 1 flows through the preionizing spark gaps 2 totally. Moreover, when the main discharge is developed, the main discharge current 11 flows therethrough totally. Therefore, a larger current than that would be necessary for preionization flows through the preionizing spark gaps 2, so that sparks with an intensity larger than a necessary level. Accordingly, wear of the spark gaps 2 reaches a considerable extent and this provides a problem in a laser apparatus for industry use where stable operation is required over a long period.

A second problem is as follows:

The discharge speed of the main discharge circuit decreases. That is, the main discharge circuit comprises the peaking capacitor 1, the preionizing spark gaps 2, and the main discharge electrodes. The discharge speed of the main discharge circuit depends on the inductance thereof. It is necessary to make this circuit as small as possible to increase the discharge speed by reducing the inductance. However, miniaturization of this circuit is limited because there is a limitation of positions of the preionizing gaps 2 for emitting ultraviolet light to illuminate the main discharge electrodes 3 suitably. Thus, it is difficult to increase the discharge speed. Decrease in the discharge speed deteriorates uniformity of the main discharge 12, so that oscillation efficiency of the laser is reduced by increase in arc discharge.

A third problem is as follows:

The sparks is developed at the preionizing spark gaps 2 to an extent more than necessity. It causes unnecessary energy consumption, so that it reduce the total efficiency of laser oscillation.

This invention is developed in order to reduce the above-mentioned problems of the prior art to prevent development of sparks to an extent more than necessity. Thus, the laser apparatus prevents wear of the preionizing spark gap, so that it can be operated stably over a long period. Moreover, this invention is developed to provide a laser apparatus where the main discharge circuit of the laser apparatus can be miniaturized, so that the discharge speed can be increased and further, the laser apparatus has a laser oscillation efficiency increased.

The present invention has been developed in order to reduce the above-described drawbacks of the known laser apparatus with preionization.

According to the present invention there is provided a laser apparatus with preionization comprising: a laser medium; main electrodes for produce a glow discharge between the main electrodes through the laser medium; an optical resonator for produce a laser light in response to the glow discharge; a first capacitor for storing a first charge used for production of the glow discharge; a preionizing circuit including a spark gap and a second capacitor connected to the spark gap in series for illuminating the laser medium around the electrodes with sparks developed between the spark gap in response to charging of the second capacitor through the spark gap with a second charge, the preionizing circuit being connected to the first capacitor in parallel; and a charging circuit responsive to a control signal for respectively charging the first and second capacitors with the first and second charges received from a high voltage source whose voltage is set to a necessary value for production of the glow discharge. The first capacitor is provided only for discharging, thus the current flowing in the spark gap is reduced, so that wear of the spark gap is reduced. Inductance associated with glow discharge is reduced because the spark gap is removed from the discharge circuit including the first capacitor, so that the discharge glow starts rapidly. A coil may be inserted in the preionizing circuit in series to control a current flowing therein. That is, the coil controls intensity of the current or delay of the current.

The invention will be more clearly understood from, the following description which is given by way of example only, with reference to the accompanying drawings, in which:

Fig. 1 is a schematic circuit diagram of a laser apparatus with preionization of a first embodiment of the invention;

Fig. 2 is an illustration for describing cross-sectional areas of the main discharge circuit and preionizing circuit of the embodiment;

Fig. 3 is a schematic circuit diagram of a laser apparatus of the second embodiment of the invention; and

Fig. 4 is a schematic circuit diagram of a prior art laser apparatus.

The same or corresponding elements or parts are designated as like references throughout the drawings.

Hereinbelow will be described a first embodiment of this invention with reference to drawings.

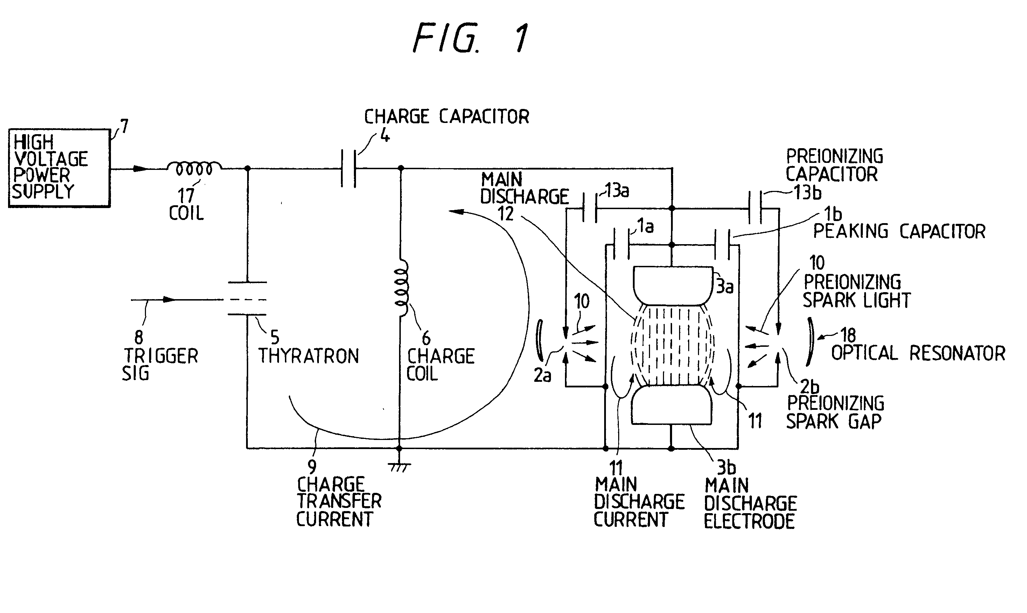

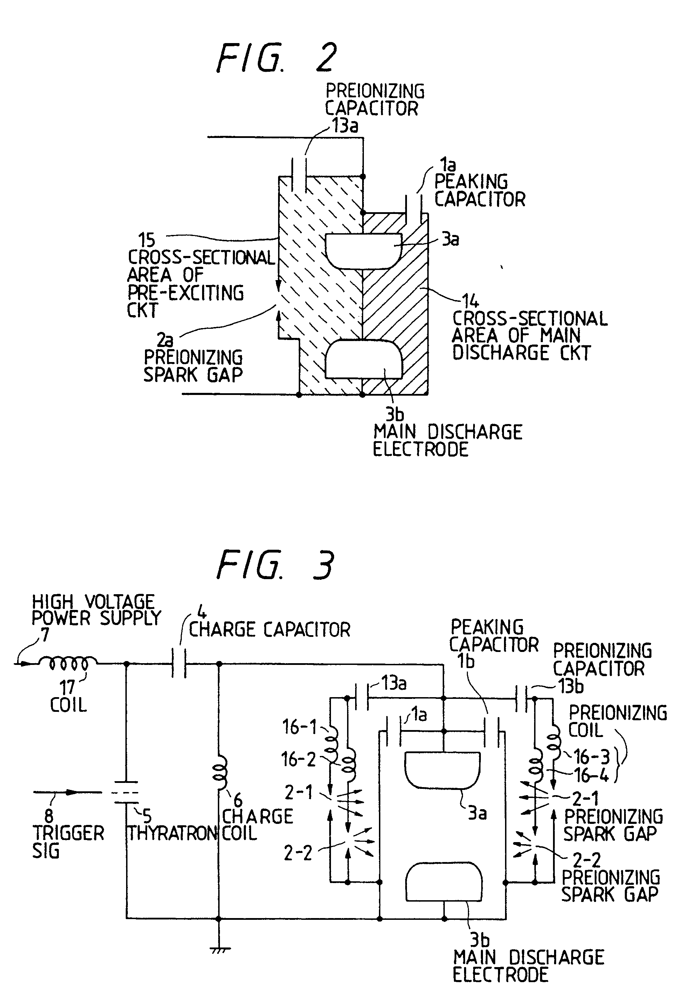

Fig. 1 is a schematic circuit diagram of a laser apparatus with preionization of the first embodiment and Fig. 2 is an illustration for describing cross-sectional areas of the main discharge circuit and preionizing circuit of this embodiment.

In Fig. 1, a discharge circuit comprises a discharge capacitor 4, a thyratron 8, and a charge coil 6. A first terminal of the charge capacitor 4 is connected to a high voltage supply 7 through a coil 17 of a noise filter. A second terminal of at the charge capacitor 4 is connected to the ground through a charge coil 6. The thyratron 8 conducts a charge at the first terminal of the charge capacitor 4 to the ground in response to a trigger signal 8. The second terminal of the charge capacitor 4 is connected to a main electrode 3a.

Another main electrode 3b is connected to the ground. A main discharge circuit comprises peaking capacitors 1a and 2a and main discharge electrodes 3a and 3b. The peaking capacitor 1a is connected to a series circuit including a preionizing capacitor 13a and a preionizing spark gap 2a in parallel. Similarly, the peaking capacitor 1b is connected to a series circuit including a preionizing capacitor 13b and a preionizing spark gap 2b in parallel.

Of the above-mentioned structure, hereinbelow will be described its operation.

The charge capacitor 4 is charged at a high voltage (about tens kilovolts) through the charge coil 6 by the dc high voltage supply 7. When the trigger signal 8 is applied to the thyratron 5, the thyratron 5 conducts the charge of the charge capacitor 4 and rapidly discharges and a charge transfer current 9 is developed. In this instance, the first terminal of the charge capacitor 4 pulse-charged is connected to the ground and thus, a potential of the second terminal of the charge capacitor 4 changes from the ground level to a minus potential corresponding to the high voltage of the high voltage supply. Accordingly, the charge at the charge capacitor 4 is applied to the discharge circuit as the transfer current 9. A portion of the charge transfer current 9 passes preionizing spark gaps 2a and 2b by discharging with sparks and charges the preionizing capacitor 13. Ultra-violet light developed by sparks at the preionizing gaps 2 illuminate the main discharge electrodes 3a and 3b and the laser medium around the main discharge electrodes 3a and 3b as preionization light 10. This illumination ionizes a laser medium gas around the main discharge electrodes 3a and 3b to make it in the state that a uniform glow discharge can be performed readily. Intensity of sparks at preionizing gaps 2a and 2b can be set freely by adjusting capacitances of the preionizing capacitors 13a and 13b. The preionizing gaps 2 are so set that the intensity of sparks becomes a necessary and sufficient level for preionization. Therefore, this prevents more intensity of the sparks than necessity, so that wear of the spark gaps 2 and energy consumption can be reduced. When the peaking capacitor 1 is sufficiently charged, a high voltage is applied between two main discharge electrodes 3a and 3b. Then, a glow discharge induced by the preionization starts within a shorter period. This produces a main discharge current 11 flowing as a pulse current with a large intensity, so that a main discharge 12 is developed between the main discharge electrodes 3a and 3b. In this case, the main discharge circuit does not include the preionizing spark gaps 2a and 2b, so that the discharge can be started at a higher speed than that of the above-mentioned prior art. Moreover, an electric energy charged in the preionizing capacitor 13 passing the preionizing spark gaps 2 flows together with the main discharge current 11 to contribute the main discharge, so that it is not a loss. In response to the discharge, laser oscillation is developed in an optical resonator 18. These operations are repeated every several milliseconds.

The above-mentioned main discharge circuit can be miniaturized because it does not include the preionizing spark gaps 2a and 2b. This miniaturization reduces its inductance, so that the speed of the main discharge 12 is increased and the efficiency of laser oscillation is improved. To put it concretely, as shown in Fig. 2, it is realized by making the cross-sectional area 14 defined by the peaking capacitor 1 and the main discharge electrodes 3a and 3b smaller. More specifically, there is provided a preferable structure to increase in a discharge speed, that the cross sectional area 14 is made smaller than a cross-sectional area 15 defined by the preionizing capacitor 13a, preionizing spark gap 2a, and the main electrodes 3a.

The preionizing gaps 2a and 2b can be arranged freely at suitable positions for illumination for the main discharge electrodes 3a and 3b because the inductance of the preionizing circuit is not a problem in this invention. Therefore, this will not cause the size of the main discharge circuit to be larger. Moreover, degree of affection of a current of the preionizing circuit to the main discharge current 11 is low and a good characteristic can be obtained when a total capacitance of the preionizing capacitor 13a and 13b is smaller than that of the peaking capacitor 1a and 1b.

Hereinbelow will be described a second embodiment of the invention. Fig. 3 is a schematic circuit diagram of a laser apparatus of the second embodiment of the invention.

A feature of this embodiment is that preionizing coils 16-1 and 16-2 are inserted in series between preionizing spark gaps 2-1 and 2-2 respectively. Similarly preionizing coils 16-3 and 16-4 are provided. Other structure is the same as the above-mentioned first embodiment.

Generally, a lot of preionizing spark gaps 2 are used to illuminate the main discharge electrodes 3a and 3b uniformly with ultraviolet light. Particularly, in the actual laser, the discharge electrodes 3a and 3b have a slender shape, so that tens of preionizing spark gaps 2-1, 2-2, ... are used for uniform illumination. In such case, it is important to unify intensities of the arc discharge of preionizing spark gaps 2-1, and 2-2. It is possible to unify the intensities of the arc discharge by unifying a current flowing through each of preionizing spark gaps 2-1 and 2-2. Further, illumination of the preionization light at a suitable timing can be done by adjusting inductances of the preionizing coils 16-1 and 16-2. That is, the arc discharge is timed to the main discharge by increase in inductance which delays the arc discharge. This can be done by providing the preionizing circuit in addition to the peaking capacitors 1a and 1b.

As mentioned above, according to this invention, providing the preionizing capacitor and the preionizing spark gap in addition to the main discharge circuit in parallel makes it possible to carry out the main discharge without the preionizing spark gap and makes it possible to mainly carry out the preionization with necessary and sufficient intensity by a series circuit of the preionizing capacitor and preionizing spark gap. As mentioned, prevention of more preionizing spark than necessary prevents wear of the preionizing spark gap, so that this provides a stable operation over a long period. Moreover, the preionizing capacitor and preionizing spark gaps provided in parallel with the peaking capacitor contribute miniaturization of the main discharge circuit, so that the speed of discharge can be increased. In addition to the increase in the speed of discharge mentioned above, the efficiency of laser oscillation can be increased because unnecessary sparks of preionization are prevented, so that a loss of unnecessary energy is reduced.

## Claims

1. A laser apparatus with preionization comprising:
   (a) a laser medium;
   (b) main electrodes to produce a glow discharge between said main electrodes through said laser medium;
   (c) an optical resonator to produce a laser light in response to said glow discharge;
   (d) a first capacitor for storing a first charge used for production of said glow discharge;
   (e) a preionizing circuit including a spark gap and a second capacitor connected to said spark gap in series for illuminating said laser medium around said electrodes with sparks developed between said spark gap in response to charging of said second capacitor through said spark gap with a second charge, said preionizing circuit being connected to said first capacitor in parallel; and
   (f) a charging circuit responsive to a control signal for respectively charging said first and second capacitors with said first and second charges received from a high voltage source whose voltage is set to a necessary value for production of said glow discharge.

2. A laser apparatus with preionization as claimed in Claim 1, wherein the capacitance of said second capacitor is smaller than that of said first capacitor.

3. A laser apparatus with preionization as claimed in Claim 1 or 2, wherein a first area defined by a circuit including said first capacitor and said main electrodes is smaller than a second area defined by said preionizing circuit and said main electrodes.

4. A laser apparatus as claimed in Claim 1, 2 or 3 wherein said preionizing circuit further comprises a coil connected to said spark gap in series for controlling a current flowing said preionizing circuit

5. A laser apparatus as claimed in Claim 4, wherein said coil controls the intensity of said current.

6. A laser apparatus as claimed in Claim 4, wherein said coil controls delay of said current.

7. A laser apparatus with preionization including:
(a) a laser medium;
(b) main electrodes to produce a glow discharge between said main electrodes through said laser medium;
(c) an optical resonator to produce a laser light in response to said glow discharge;
(d) a preionizing circuit including a spark gap and a first capacitor connected to said spark gap in series for storing a first charge and for illuminating said laser medium around said electrodes with sparks developed between said spark gap in response to charging of said first capacitor through said spark gap with said charge; and
(e) a charging circuit responsive to a control signal for charging said first capacitor with said first charge received from a high voltage source whose voltage is set to a necessary value for production of said glow discharge, and

means for reducing an inductance associated with discharging of said charge through said main electrodes by providing a second capacitor connected to said preionizing circuit in parallel for storing a second charge and for applying said charge to said main electrodes to produce said glow discharge, said charging circuit further charging said second capacitor in response to said control signal.

8. A laser apparatus with preionization as claimed in Claim 7, wherein first area defined by a circuit including said second capacitor and said main electrodes is smaller than a second area defined by said preionizing circuit and said main electrodes.

FIG. 1

EP 0 446 072 A2

# FIG. 2

PREIONIZING CAPACITOR
13a

1a PEAKING CAPACITOR

15 CROSS-SECTIONAL AREA OF PRE-EXCITING CKT

3a

14 CROSS-SECTIONAL AREA OF MAIN DISCHARGE CKT

2a PREIONIZING SPARK GAP

3b MAIN DISCHARGE ELECTRODE

# FIG. 3

HIGH VOLTAGE POWER SUPPLY
7

4 CHARGE CAPACITOR

PEAKING CAPACITOR
1b

PREIONIZING CAPACITOR
13b

17 COIL

13a

1a

16-1
16-2

16-3
16-4

PREIONIZING COIL

2-1

3a

2-1 PREIONIZING SPARK GAP

8 TRIGGER SIG

5 THYRATRON

6 CHARGE COIL

2-2

2-2 PREIONIZING SPARK GAP

3b MAIN DISCHARGE ELECTRODE

FIG. 4    PRIOR ART

HIGH VOLTAGE
POWER SUPPLY
7

17
COIL

4
CHARGE
CAPACITOR

8
TRIGGER
SIG

5
THYRATRON

6
CHARGE
COIL

9
CHARGE
TRANSFER
CURRENT

1
PEAKING
CAPACITOR

12

3

10
PREIONIZING
SPARK LIGHT

10

2

2
PREIONIZING
SPARK GAP

11

11
MAIN
DISCHARGE
CURRENT

3
MAIN
DISCHARGE
ELECTRODE

EP 0 446 072 A2

9